# FASCICULE DE BREVET EUROPEEN

(11) **EP 3 516 757 B1**
(45) Date de publication et mention de la délivrance du brevet: **09.09.2020**
(21) Numéro de dépôt: 17784352.1
(22) Date de dépôt: 19.09.2017
(51) Int. Cl.: H02K 9/04, H02K 9/14, H02K 1/32

(54) **MACHINE ELECTRIQUE REFROIDIE PAR UNE HÉLICE DOUBLE FLUX**
DURCH EIN ZWEISTROMLAUFRAD GEKÜHLTE ELEKTRISCHE MASCHINE
ELECTRICAL MACHINE COOLED BY A DUAL-FLOW IMPELLER

(30) Priorité: 21.09.2016 FR 1658870
(43) Date de publication de la demande: 31.07.2019
(73) Titulaire: Institut VEDECOM, 78000 Versailles (FR)
(72) Inventeur: DIEMUNSCH, Guy, 38600 Fontaine (FR)
(74) Mandataire: Ménès, Catherine
(86) Numéro de dépôt international: PCT/FR2017/052513
(87) Numéro de publication internationale: WO 2018/055285

(56) Documents cités:
- EP-A2- 2 549 624
- DE-B3-102007 006 986
- JP-A- 2003 219 605

## Description

La présente invention revendique la priorité de la demande française 1658870 déposée le 21 septembre 2016.

Le domaine de la présente invention est celui des machines électriques, de préférence tournantes, telles que des générateurs ou des moteurs. Plus particulièrement, ces machines électriques sont destinées à être installées sur des véhicules, notamment automobiles, comme par exemple des véhicules routiers ou des trains.

Les machines électriques tournantes telles que des générateurs ou des moteurs, comprennent un stator et un rotor. Des enroulements formant des bobines sont montés sur le stator et, par exemple des aimants permanents sont fixés au rotor. Le rotor est mobile en rotation par l'intermédiaire d'un arbre. Lorsque la machine électrique est un générateur, le mouvement en rotation du rotor face aux bobines du stator permet de générer une énergie électrique et lorsque la machine électrique est un moteur, la mise en rotation du rotor génère une énergie mécanique.

Dans le cas où ces machines électriques sont utilisées pour mettre en mouvement un véhicule électrique, il convient de minimiser le poids de tous éléments embarqués sur le véhicule car ce poids impacte directement l'autonomie d'une source électrique chargée d'alimenter la machine électrique de propulsion du véhicule. Cette recherche de réduction de poids se traduit par une optimisation de la compacité de cette machine électrique, tout en conservant le même niveau de performance.

Cette situation conduit à une augmentation de la densité de chaleur produite par la machine électrique, qui peut affecter la magnétisation du rotor. Il convient donc de le refroidir pour éviter une surchauffe pouvant engendrer une réduction des performances, une casse de certains composants, voire une destruction de la machine électrique.

Parmi les composants de la machine électrique à refroidir, il faut citer, les bobines, et plus particulièrement les têtes de bobines, mais également les tôles formant le stator et le rotor. Il en est de même pour le faible espace existant entre le rotor et le stator, appelé entrefer. Ces composants sont des éléments critiques, qui dimensionnent la performance générale de la machine électrique. En gardant à l'esprit cette réduction de la taille de la machine électrique, il devient particulièrement difficile de refroidir ces composants de manière efficace.

Il est connu de refroidir une machine électrique au moyen d'un flux à circulation forcée. Une telle circulation est opérée à l'aide d'une hélice assurant un refroidissement d'une machine tournante. Toutefois, ces hélices ne permettant pas un brassage suffisant et un débit optimal du flux circulant dans la machine électrique. Un exemple de machine électrique comprenant une hélice est divulgué dans le document JP2003219605.

L'invention a pour objet de résoudre au moins en partie l'un des problèmes techniques précédent. À cet effet, l'invention propose un ensemble tel que défini dans les revendications 1-13.

Ainsi l'invention permet de générer un flux d'air assurant une bonne circulation du fluide de refroidissement à l'intérieur de la machine électrique et permettant par conséquent un refroidissement amélioré. À titre non limitatif, le fluide de refroidissement est avantageusement de l'air. Ce refroidissement amélioré est le résultat d'un brassage du fluide de refroidissement optimal et d'un débit de fluide de refroidissement augmenté à l'intérieur de la machine électrique à refroidir.

Par « sens opposé » on entend, par exemple, que le premier sens s'éloigne de l'hélice de refroidissement alors que le deuxième sens se rapproche l'hélice de refroidissement, ou inversement.

Selon différentes caractéristiques de l'invention prises seules ou en combinaison, on pourra prévoir que :
- l'hélice de refroidissement comprend plus de pales sur la deuxième couronne que de pales sur la première couronne, ceci permet notamment d'améliorer le déplacement du fluide de refroidissement;
- l'hélice de refroidissement comprend au moins une bague reliant la première couronne et la deuxième couronne et définissant une face externe de la première couronne et une face interne de la deuxième couronne ;
- la première couronne de l'hélice de refroidissement comprend :
   - une première bague définissant une face interne de la première couronne,
   - une deuxième bague définissant une face externe de la première couronne,
   - une pluralité de pales disposée entre la première bague et la deuxième bague;
- la deuxième couronne de l'hélice de refroidissement comprend :
   - une deuxième bague définissant une face interne de la deuxième couronne,
   - une troisième bague définissant une face externe de la deuxième couronne,
   - une pluralité de pales disposée entre la deuxième bague et la troisième bague;
- la deuxième bague est commune à la première couronne et à la deuxième couronne de l'hélice de refroidissement;
- la première couronne de l'hélice de refroidissement présente un rayon moyen inférieur à un rayon moyen de la deuxième couronne de ladite hélice de refroidissement. Le rayon moyen d'une couronne étant égal à la moyenne des rayons de la face interne et de la face externe de ladite couronne ;
- un plan passe par toutes les couronnes de l'hélice de refroidissement. Autrement dit, cela signifie que les couronnes sont disposées radialement l'une au-dessus de l'autre, tout en étant contenues dans le plan de l'hélice de refroidissement;
- l'hélice de refroidissement comprend un moyeu définissant une face interne de la première couronne;
- au moins un bras de liaison relie le moyeu à la première couronne de l'hélice de refroidissement;
- chaque couronne présente une même épaisseur le long d'un axe de rotation de l'hélice de refroidissement;
- au moins une pale de l'hélice de refroidissement comprend une première extrémité ayant une forme arrondie;
- au moins une pale de l'hélice de refroidissement comprend une seconde extrémité ayant une forme en pointe ;
- la ou les pales de l'hélice de refroidissement s'amincissent progressivement entre la première et la seconde extrémité ;
- au moins une pale de l'hélice de refroidissement présente une courbure selon un axe d'allongement de la pale. On notera que la courbure des pales de la première couronne est différente de la courbure des pales de la deuxième couronne. Selon un mode de réalisation, un rayon définissant la courbure des pales de la première couronne est inférieur à un rayon définissant la courbure des pales de la deuxième couronne;
- les pales de la première couronne de l'hélice de refroidissement s'étendent dans un plan vertical sécant en un point à un plan vertical dans lequel s'étendent les pales de la deuxième couronne ;
- l'hélice de refroidissement est configurée pour aspirer et propulser le fluide de refroidissement dans une direction parallèle à un axe de rotation autour duquel tourne ladite hélice de refroidissement ;
- selon une première variante de réalisation, l'hélice de refroidissement est couplée en rotation à la machine électrique. Selon une deuxième variante de réalisation, l'hélice de refroidissement est découplée en rotation de la machine électrique ;
- l'hélice de refroidissement est indépendante de l'arbre entraînant le rotor en rotation. En d'autres termes, l'hélice n'est pas couplée en rotation à la machine électrique. Ainsi, la vitesse à laquelle tourne la machine électrique n'influence pas la vitesse à laquelle tourne l'hélice de refroidissement, cela permet d'évacuer la chaleur générée par la machine électrique lorsqu'elle tourne à faible vitesse ;
- l'hélice de refroidissement est configurée pour être entrainée en rotation par un actionneur électrique indépendant de la machine électrique. Par indépendant on entend que l'actionneur électrique est mécaniquement indépendant de la machine électrique;
- l'actionneur électrique indépendant est fixé sur un flasque de la machine électrique ;
- l'hélice de refroidissement est agencée de manière à générer une circulation d'un fluide de refroidissement selon un sens de circulation dans un entrefer situé entre le rotor et le stator de la machine électrique ;
- l'hélice de refroidissement est agencée de manière à générer une circulation d'un fluide de refroidissement selon un sens de circulation le long d'une face externe du stator;
- la face externe du stator comprend des ailettes de refroidissement ;
- l'hélice de refroidissement est située sur une extrémité longitudinale de la machine électrique;
- la machine électrique comprend une chemise dans laquelle sont placés le stator et le rotor, l'hélice de refroidissement étant placée à une extrémité longitudinale de la chemise. On comprend notamment ici que la bague externe de l'hélice de refroidissement est dans le prolongement longitudinal d'une paroi formant la chemise ;
- l'ensemble comprend un espace situé entre la chemise et une extrémité des ailettes de refroidissement apte à être parcourue par le fluide de refroidissement ;
- l'hélice de refroidissement est agencée de manière à générer une circulation d'un fluide de refroidissement selon un sens de circulation dans un espace situé entre le rotor et l'arbre configuré pour entraîner en rotation le rotor, et plus particulièrement au niveau d'encoche(s) ménagées au niveau du rotor, en regard de l'arbre ;
- l'hélice de refroidissement est agencée de manière à générer une circulation d'un fluide de refroidissement selon un sens de circulation à l'intérieur de l'arbre configuré pour entraîner en rotation le rotor, ledit arbre étant creux ;
- l'arbre de machine électrique est agencé pour s'insérer dans une partie d'une cavité interne du rotor, ledit rotor comprenant, dans une zone externe, au moins un élément magnétique générant un flux électromagnétique, la cavité interne dudit rotor étant délimitée par au moins deux encoches adjacentes séparées l'une de l'autre par une portion de contact configurée pour venir en appui sur l'arbre, au moins une partie d'une paroi délimitant les encoches respectant le flux électromagnétique généré par l'élément magnétique. Ainsi, les encoches formées sur le rotor permettent à la fois de créer un passage de fluide de refroidissement entre le rotor et l'arbre de la machine électrique et permettent aussi d'alléger le rotor. Le passage de fluide de refroidissement permet un refroidissement par convection forcée du rotor et de l'arbre de la machine électrique. Deux encoches sont dites adjacentes lorsqu'elles sont séparées uniquement par une seule portion de contact. Les portions de contact permettent d'assurer que le rotor reste au contact de l'arbre de la machine électrique et permettent la transmission du mouvement de rotation. Par la notion de « respecter le flux électromagnétique » il est entendu que la partie de la paroi suit un profil vu en coupe identique ou similaire à une ligne de flux magnétique généré par l'élément magnétique. Cette partie ne coupe donc pas les lignes de flux électromagnétiques. Selon un exemple de réalisation, la partie de paroi qui respecte le flux électromagnétique est courbée dans un plan perpendiculaire à un axe de rotation du rotor ;
- la paroi délimitant les encoches s'étend dans un plan perpendiculaire à un axe de rotation du rotor ;
- le rotor est formé par un assemblage de tôles rotoriques, chaque tôle rotorique comprenant la partie de la paroi respectant le flux électromagnétique et délimitant les encoches ;
- chaque encoche a une forme courbe concave vu d'un axe de rotation du rotor ;
- la portion de contact a une forme circulaire convexe vu d'un axe de rotation du rotor;
- les encoches sont régulièrement réparties angulairement. Plus précisément, un secteur angulaire constant entre deux encoches adjacentes est égal à 360/P, où P correspond au nombre total d'éléments magnétiques ;
- un intervalle angulaire entre les encoches et les portions de contact est constant. Plus précisément, l'intervalle angulaire constant entre les encoches et les portions de contact est égal à 360/2P, où P correspond au nombre total d'éléments magnétiques. Ainsi, pour huit éléments magnétiques, l'intervalle angulaire constant entre les encoches et les portions de contact est égal à 22,5 degrés par rapport à un axe de rotation du rotor. Cela signifie alors que le rotor présente huit encoches tous les 45 degrés et huit portions de contact tous les 45 degrés. Le secteur angulaire est mesuré entre un premier rayon du rotor passant par un sommet de la première encoche et un deuxième rayon du rotor passant par un sommet de la deuxième encoche. L'intervalle angulaire est mesuré entre un rayon du rotor passant par un sommet de l'encoche et un rayon du rotor passant par un centre de symétrie de la portion de contact;
- un rayon du rotor passant par un centre de l'élément magnétique passe aussi par un point de l'encoche le plus éloigné d'un axe de rotation du rotor. Ainsi, on assure que les éléments magnétiques sont alignés avec les encoches. Le point de l'encoche le plus éloigné de l'axe de rotation peut aussi être appelé sommet de l'encoche. Lorsque l'encoche présente un plan de symétrie, notamment longitudinal, le rayon du rotor peut également passer par le centre de l'élément magnétique et par le plan de symétrie longitudinal de l'encoche;
- deux éléments magnétiques adjacents, présentant chacun une polarité radiale nord et une polarité radiale sud, sont positionnés sur le rotor de manière à ce que leurs polarités soient inversées l'une par rapport à l'autre. Deux éléments magnétiques sont dits adjacents lorsqu'ils sont chacun dans le voisinage immédiat de l'autre. Les polarités inversées signifient que si un élément magnétique donné présente une polarité radiale externe nord et une polarité radiale interne sud, alors l'élément magnétique adjacent présente une polarité radiale externe sud et une polarité radiale interne nord.
- chaque encoche a un sommet arrondi. Le sommet de l'encoche correspond au point le plus éloigné de l'axe de rotation et peut aussi correspondre au point le plus proche de l'élément magnétique ;
- l'arbre comprend des rainures pour coopérer avec les portions de contact du rotor;
- les rainures s'étendent parallèlement à un axe de rotation du rotor.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 est une vue de face d'une hélice de refroidissement de l'ensemble selon la présente invention, mise en mouvement par un actionneur électrique indépendant,
- la FIGURE 2 est une vue de côté de l'hélice de refroidissement illustrée sur la FIGURE 1,
- la FIGURE 3 est une vue en perspective de l'hélice de refroidissement illustrée sur la FIGURE 1,
- la FIGURE 4 est une vue partielle en perspective des pales de l'hélice de refroidissement illustrée sur la FIGURE 1,
- la FIGURE 5 est une vue partielle de dessus de l'hélice de refroidissement illustrée sur la FIGURE 1 et représentée sans ses bagues,
- la FIGURE 6 est une vue en perspective de l'hélice de refroidissement suivant sa deuxième face et sans ses bagues,
- la FIGURE 7 est une vue en perspective et en coupe partielle d'un ensemble selon la présente invention comprenant une machine électrique et l'hélice de refroidissement de la FIGURE 1, notamment,
- la FIGURE 8 est une vue en perspective d'un ensemble selon la présente invention et dans lequel la machine électrique comprend une chemise,
- la FIGURE 9 est une vue en perspective d'un ensemble selon la présente invention et dans laquelle la machine électrique est représentée sans sa chemise et avec l'hélice de refroidissement illustrée sur la FIGURE 1,
- la FIGURE 10 est une vue en coupe longitudinale d'un premier exemple de réalisation de l'ensemble selon la présente invention et dans lequel l'hélice de refroidissement est indépendante de l'arbre entraînant le rotor,
- la FIGURE 11 est une vue en perspective et en coupe partielle d'un deuxième exemple de réalisation de l'ensemble selon la présente invention et dans lequel l'hélice de refroidissement est solidaire de l'arbre entraînant le rotor,
- la FIGURE 12 est une vue en coupe longitudinale d'un ensemble selon le deuxième mode de réalisation de la présente invention où l'hélice est solidaire de l'arbre entraînant le rotor.
- la FIGURE 13 est une vue en perspective d'une machine électrique, ladite machine électrique comprenant un rotor monté sur un arbre mobile en rotation,
- la FIGURE 14 est une vue de face du rotor de la machine électrique illustrée sur la FIGURE 13,
- la FIGURE 15 est un agrandissement d'une partie de la FIGURE 14 où l'on peut voir les lignes de flux électromagnétique,
- la FIGURE 16 est une vue en coupe longitudinale d'une variante de la machine électrique illustrée sur la FIGURE 13 et dans laquelle l'arbre présente des rainures collaborant avec le rotor,

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les FIGURES, les éléments communs à plusieurs FIGURES conservent la même référence.

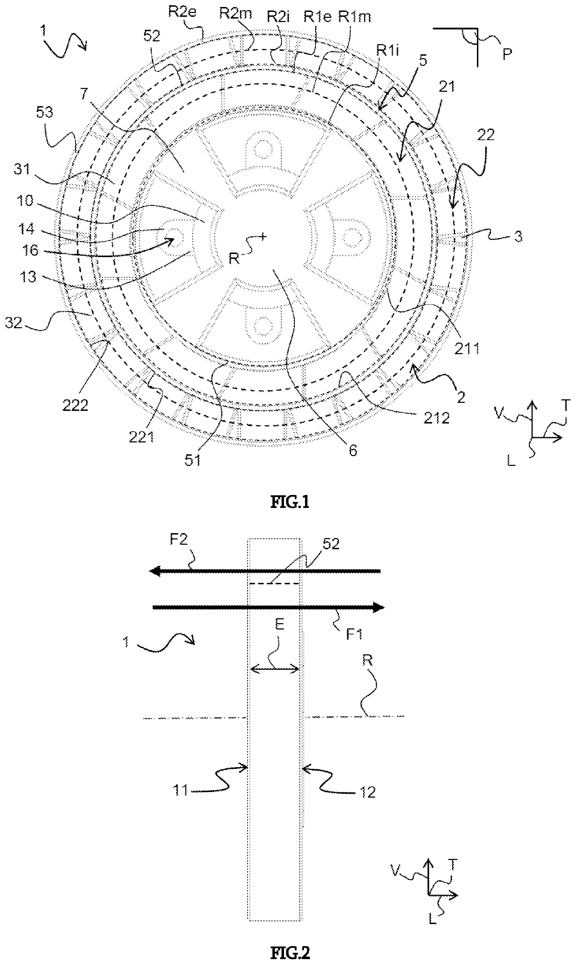

Dans la description qui suit, les notions relatives telles que « interne » ou « externe » sont définies par rapport à un axe de rotation R défini comme l'axe autour duquel tourne l'hélice de refroidissement. La notion « d'interne » selon ce repère signifie que l'élément considéré se situe ou se dirige radialement vers l'intérieur de l'hélice de refroidissement, tandis que la notion « d'externe » selon ce repère signifie que l'élément considéré se situe ou se dirige radialement vers l'extérieur de l'hélice de refroidissement. Un axe longitudinal L est défini comme l'axe selon lequel la machine électrique s'étend dans sa longueur, l'axe longitudinal L et l'axe de rotation R étant confondu lorsque l'ensemble selon l'invention est formé. Dans la description qui va suivre, on se réfèrera aussi à une orientation en fonction des axes longitudinaux L, verticaux V et transversaux T, tels qu'ils sont définis arbitrairement par le trièdre L, V, T représenté sur les FIGURES 1, 2 et 9. Le choix des appellations de ces axes n'est pas limitatif de l'orientation que peut prendre l'hélice dans son application à un véhicule automobile.

La FIGURE 1 montre une hélice 1 de refroidissement destinée au refroidissement d'une machine électrique. Cette hélice 1 de refroidissement est mobile en rotation autour d'un axe de rotation R. L'hélice 1 de refroidissement comprend au moins deux couronnes 2, dont une première couronne 21 et une deuxième couronne 22, chaque couronne 2 comprenant des pales 3. Pour plus de clarté, dans la suite de la description, les pales de la première couronne 21 seront appelées premières pales 31 et les pales de la deuxième couronne 22 seront appelées deuxièmes pales 32. L'hélice 1 de refroidissement s'étend radialement dans un plan P et les couronnes 2 sont disposées l'une au-dessus de l'autre dans ce même plan P de l'hélice de refroidissement. Autrement dit, les couronnes 2, 21, 22 de l'hélice 1 de refroidissement sont coaxiales selon l'axe de rotation R.

L'hélice 1 de refroidissement comprend des bagues 5 permettant de séparer chaque couronne 2. Il est à noter que chaque bague 5 s'étend selon leur plus grande dimension le long de l'axe de rotation R de l'hélice 1 de refroidissement. Autrement dit, la plus grande dimension de chaque bague 5 est perpendiculaire aux pales 3 de l'hélice 1 de refroidissement. Plus particulièrement, la première couronne 21 comprend une première bague 51, aussi appelée bague interne, définissant une face interne 211 de la première couronne 21. La première couronne 21 comprend une deuxième bague 52, aussi appelée bague intermédiaire, définissant une face externe 212 de la première couronne 21. Les pales 3 de la première couronne 21 sont alors disposées radialement entre la première bague 51 et la deuxième bague 52.

De la même manière, la deuxième couronne 22 comprend la deuxième bague 52, dite bague intermédiaire, définissant une face interne 221 de la deuxième couronne 22. La deuxième couronne 22 comprend une troisième bague 53, appelée bague externe, définissant une face externe 222 de la deuxième couronne 22. Les pales 3 de la deuxième couronne 21 sont alors disposées radialement entre la deuxième bague 52 et la troisième bague 53.

Ici l'hélice 1 de refroidissement ne comprend que deux couronnes, ainsi la bague intermédiaire 52 entre la première couronne 21 et la deuxième couronne 22 définie à la fois la face externe 212 de la première couronne 21 et la face interne 221 de la deuxième couronne 22.

La FIGURE 1 montre également que chaque couronne 2 présente un rayon moyen. Le rayon moyen est défini comme étant la moyenne entre le rayon de la face interne et le rayon de la face externe pour une même couronne. Ainsi, la première couronne 21 présente un rayon interne R1 i, un rayon externe R1 e et un rayon moyen R1m. Il en est de même pour la deuxième couronne 22 avec son rayon interne R2i, son rayon externe R2e et son rayon moyen R2m. On note alors que la première couronne 21 présente un rayon moyen R1m inférieur au rayon moyen R2m de la deuxième couronne 22.

Par ailleurs, l'hélice 1 de refroidissement comprend un moyeu 6 destiné à coopérer avec un arbre permettant d'entraîner en rotation l'hélice 1 de refroidissement. Le moyeu définit alors la face interne 211 de la première couronne 21. Le moyeu 6 comporte sur une de ses faces des bras de liaison 7 reliant le moyeu 6 à la première couronne 21. Ces bras de liaison 7 sont orientés dans la direction des sollicitations et s'étendent ici radialement par rapport à l'hélice 1 de refroidissement. Les bras de liaison 7 permettent alors de transmettre le mouvement de rotation du moyeu 6 aux couronnes 2, 21, 22.

Il est à noter que le moyeu 6 s'étend dans un plan perpendiculaire à l'axe de rotation R de l'hélice 1 de refroidissement et passant par l'ensemble des pales 3 de l'hélice 1 de refroidissement. Ainsi, on s'assure que l'encombrement de l'hélice 1 de refroidissement est optimisé. Plus généralement, on peut dire que le moyeu 6 s'étend dans un plan perpendiculaire à l'axe de rotation R de l'hélice 1 de refroidissement et passant par au moins une des pales 3 de l'hélice 1 de refroidissement.

En outre, comme cela est visible en FIGURE 2, l'hélice 1 de refroidissement conserve de préférence une même épaisseur E, mesurée selon l'axe de rotation R de l'hélice 1 de refroidissement. L'hélice 1 de refroidissement est de préférence à simple ouïe, c'est-à-dire qu'elle ne contient qu'une seule roue comportant les couronnes placées radialement l'une au-dessus de l'autre. La notion de simple ouïe s'oppose par exemple à une hélice double ouïe qui comporte deux roues accolées l'une à l'autre selon l'axe de rotation R et ne présentant qu'un seul moyeu. Par ailleurs, la FIGURE 2 montre également que l'hélice 1 de refroidissement génère un flux de fluide de refroidissement selon deux sens opposés F1, F2. On notera que le fluide est aspiré et propulsé parallèlement à l'axe de rotation R de l'hélice 1 de refroidissement, ainsi l'hélice est dite de type axial ou hélicoïdal. Les hélices de type axial ou hélicoïdal s'opposent aux hélices de type radial ou centrifuge pour lesquelles le fluide est aspiré parallèlement à l'axe de rotation R et est propulsé perpendiculairement à ce même axe R.

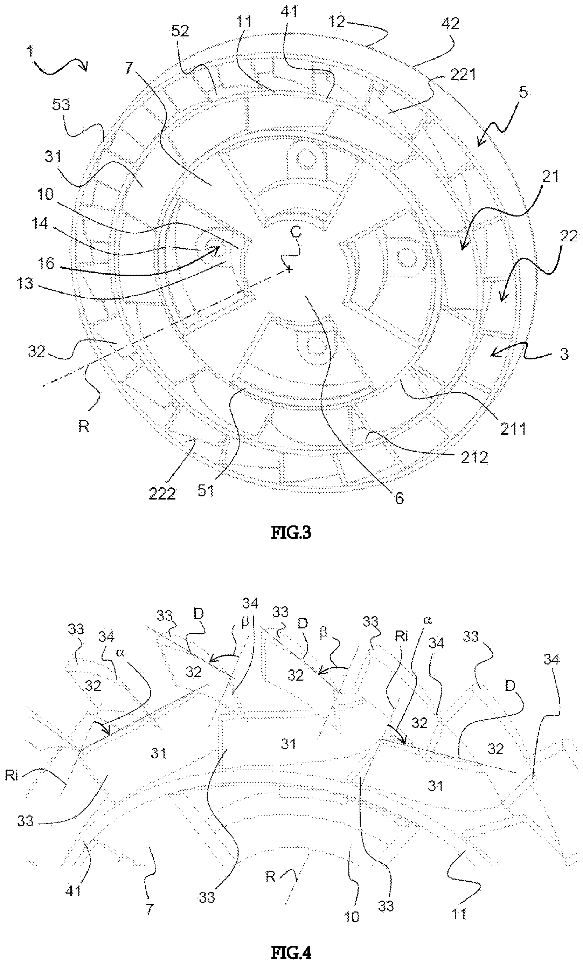

La FIGURE 3 représente l'hélice 1 de refroidissement en perspective. L'hélice 1 de refroidissement comprend alors une première face 11 et une deuxième face 12. Plus précisément, les faces 11, 12 sont définies dans des plans passant par des bords d'extrémité qui délimitent axialement les bagues 5, 51, 52, 53. La première face 11 est ici définie comme le plan comprenant à la fois les bras de liaison 7 ainsi que les premiers bords d'extrémité 41 formant les bagues 5, 51, 52, 53. La deuxième face 12 est quant à elle définie comme celle destinée à recevoir un arbre permettant d'entraîner en rotation l'hélice 1 de refroidissement, la deuxième face 12 comprenant les seconds bords d'extrémité 42 formant les bagues 5, 51, 52, 53 et situés à l'opposé des premiers bords d'extrémité 41.

Les pales 3 de la première couronne 21, dites premières pales 31, sont agencées de manière à générer une circulation d'un fluide de refroidissement dans un premier sens F1 de circulation et les pales 3 de la deuxième couronne 22, dites deuxièmes pales 32, sont agencées de manière à générer la circulation du fluide de refroidissement dans un deuxième sens F2 de circulation, le deuxième sens F2 étant opposé au premier sens F1. Par « sens opposé », on entend, par exemple, que le premier sens F1 s'éloigne de l'hélice de refroidissement alors que le deuxième sens F2 se rapproche de l'hélice de refroidissement, ou inversement. On observe que pour une même couronne 2, les pales 3 sont diamétralement opposées par rapport à l'axe de rotation R de l'hélice 1 de refroidissement.

Par ailleurs, le fluide de refroidissement peut tout aussi bien être un liquide qu'un gaz. De manière non limitative, la description qui suit considère que le fluide de refroidissement est ici de l'air.

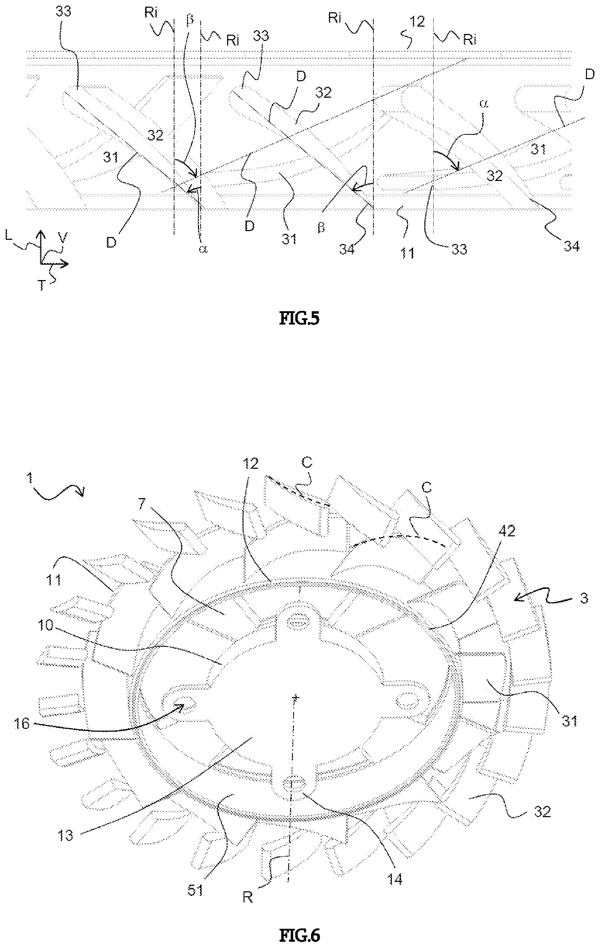

Comme illustré par les FIGURES 4 et 5, chaque pale 3 peut se présenter sous la forme d'une lame incurvée. Ici, la lame est par exemple de forme rectangulaire et présente au moins un bord long et au moins un bord court. Le bord court est défini par des extrémités longitudinales 33, 34 de la pale 3 et le bord long est défini par une zone de contact entre la pale et une des bagues 5, 51-53. On note que chaque pale 3 comprend une première extrémité longitudinale 33 et une deuxième extrémité longitudinale 34. Ces extrémités 33, 34 délimitent la hauteur du rectangle cerclant la pale 3, 31, 32. De manière non limitative, la première extrémité 33 est arrondie et la deuxième extrémité 34 est en pointe. De telles extrémités 33, 34 permettent d'optimiser l'aérodynamisme et le déplacement de l'air. Les pales 3, 31, 32 comprenant les extrémités 33, 34 arrondies et en pointes présentent alors une face interne et une face externe s'amincissant progressivement à l'approche de la seconde extrémité 34 en pointe.

D'une couronne à l'autre, ces extrémités 33, 34 sont disposées en opposition les unes par rapport aux autres, c'est-à-dire que les extrémités arrondies 33 des premières pales 31 sont par exemple orientées vers, voire disposées sur, la première face 11 de l'hélice 1 de refroidissement alors que les extrémités arrondies 33 des deuxièmes pales 32 sont orientées vers, voire disposées sur, la deuxième face 12 de l'hélice 1 de refroidissement.

La FIGURE 5 représente une vue partielle de dessus des premières pales 31 et des deuxièmes pales 32 de l'hélice 1 de refroidissement représentée sans bagues référencées 5, 51, 52, 53. Chaque pale 3, 31, 32 présente une droite de référence D passant par chacune des deux extrémités 33, 34 longitudinales de la pale 3, 31, 32, sur une même face de la pale 3. En partant de la première face 11 de l'hélice 1 de refroidissement, les pales 31, 32 et leurs droites de référence D sont disposées obliquement par rapport à l'axe de rotation R de l'hélice 1 de refroidissement ou par rapport à des droites Ri parallèles à l'axe de rotation R. Par obliquement, on entend que les pales 3 ne sont ni parallèles, ni perpendiculaires par rapport à l'axe de rotation R de l'hélice 1 de refroidissement et aux droites Ri parallèles à l'axe de rotation R. Plus précisément, en prenant la première extrémité 33 d'une première pale 31 orientée vers la première face 11 de l'hélice 1 de refroidissement, la droite de référence D de la première pale 31 forme alors un premier angle α avec la droite parallèle Ri. En prenant la deuxième extrémité 34 d'une deuxième pale 32 orientée vers la première face 11 de l'hélice 1 de refroidissement, la droite de référence D de la deuxième pale 32 forme alors un deuxième angle β avec la droite parallèle Ri. On note alors que le premier angle α est dans un sens horaire par rapport à la droite parallèle Ri alors que le deuxième angle β est dans un sens antihoraire par rapport à la droite parallèle Ri. Autrement dit, le premier angle α a une valeur négative, alors que le deuxième angle β a une valeur positive. De manière plus globale, on peut conclure que les plans dans lesquelles s'étendent verticalement les premières pales 31 et les deuxièmes pales 32 se croisent. Il est à préciser, que les plans dans lesquelles s'étendent verticalement les premières pales 31 et les deuxièmes pales 32 ne sont pas confondus.

Par ailleurs, les pales 3, 31, 32 présentent une courbure C (cf. FIGURE 6) selon leur axe d'allongement. La courbure C s'étend de la première extrémité de la pale 3, 31, 32 à l'autre extrémité 34. Plus précisément, en partant de l'extrémité 33, 34 située au plus proche de la première face 11 de l'hélice 1 de refroidissement, la courbure C de la pale est dans un sens antihoraire pour les premières pales 31 et dans un sens horaire pour les secondes pales 32.

En outre, la première couronne 21 comprend moins de pales 3 que la deuxième couronne 22. En effet, dans l'exemple de réalisation représenté sur la FIGURE 6, la première couronne 21 comprend douze pales 31 et la deuxième couronne 22 comprend vingt-deux pales 32. Plus précisément, la première couronne 21 comprend une pale 31 tous les trente degrés et la deuxième couronne 22 comprend une pale 32 tous les 17 degrés environ.

L'hélice 1 de refroidissement est de préférence fabriquée par moulage. Plus précisément, les pales 3, 31, 32, les bagues 5, 51, 52, 53, le moyeu 6 et les bras de liaison sont tous réalisés par moulage lors d'une même étape de moulage. Ainsi, l'hélice 1 de refroidissement est monobloc.

Par ailleurs, l'hélice 1 de refroidissement peut être entraînée en rotation par un actionneur électrique 10. Cet actionneur électrique 10 est indépendant mécaniquement d'une machine électrique que l'hélice 1 de refroidissement refroidit. L'actionneur électrique 10 est situé au niveau du moyeu 6 de l'hélice 1 de refroidissement et plus précisément sur la deuxième face 12 de l'hélice 1 de refroidissement. L'actionneur électrique 10 de l'hélice 1 de refroidissement comprend sur la face opposée à l'hélice 1 de refroidissement un support de fixation 13 permettant par exemple une fixation à la machine électrique. Ce support de fixation 13 est matérialisé ici par des pattes de fixation 14 comprenant au moins un orifice 16 apte à laisser passer un moyen de fixation. Le moyen de fixation peut par exemple être une vis ou un rivet. Ainsi, le support de fixation 13 est destiné à solidariser l'hélice 1 de refroidissement ainsi formée sur une machine tournante ayant des besoins en refroidissement. Dans l'exemple de réalisation représenté sur les FIGURES 1 à 6, le support de fixation 13 comprend quatre pattes de fixation 14 réparties angulairement à 90° et comprenant chacune un orifice 16. Selon une alternative, l'actionneur électrique 10 de l'hélice 1 de refroidissement pourrait être fixé par collage ou par tout autre moyen capable de solidariser l'actionneur électrique 10 sur un support.

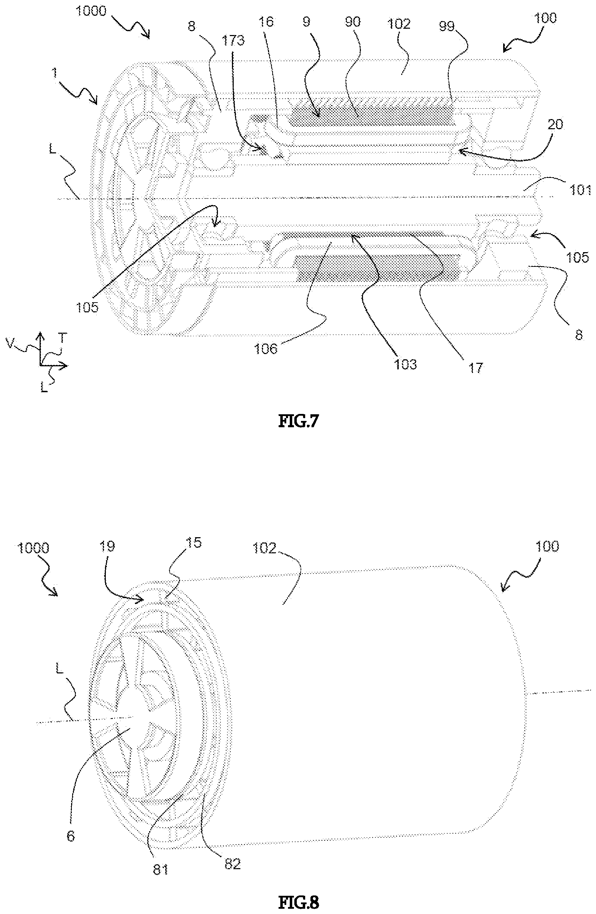

Un ensemble 1000 comprenant une machine électrique 100 et l'hélice 1 de refroidissement telle que précédemment décrite est visible en FIGURE 7. L'hélice 1 de refroidissement est destinée à refroidir la machine électrique 100 en aspirant et en propulsant un fluide de refroidissement, préférentiellement gazeux dans divers passages de fluide de refroidissement ménagés dans la machine électrique 100. Le fluide de refroidissement est par exemple de l'air.

Il est à noter que l'air entrant par l'hélice 1 de refroidissement est de l'air extérieur à la machine électrique 100, tandis que l'air sortant par l'hélice 1 de refroidissement est de l'air intérieur à la machine électrique 100. En effet, la machine électrique montrée en FIGURE 7 est une machine dite ouverte, c'est-à-dire exposée à l'air extérieur à celle-ci. On précise également que la machine électrique 100, décrite ci-dessous, comprend un unique circuit de refroidissement, notamment par de l'air extérieur. En d'autres termes, la machine électrique 100 est uniquement refroidie par de l'air.

La machine électrique 100 comprend un stator 9 ainsi qu'un arbre 101 entrainant en rotation un rotor 103. Un entrefer 20 ménagé entre le stator 9 et le rotor 103 forme un premier passage de fluide de refroidissement dans la machine électrique 100.

Le stator 9 peut être réalisé par un empilement de tôles 90 sur lesquelles sont montées des enroulements formant une pluralité de bobines 106. Les bobines 106 présentent des têtes de bobines 16 et chaque tête de bobine 16 dépasse longitudinalement de l'empilement des tôles 90 du stator 9, le long de l'axe longitudinal L de la machine électrique 100. Chaque tôle 90 du stator 9 peut optionnellement comprendre au moins une ailette de refroidissement 99 issue de sa périphérie externe et permettant ainsi un refroidissement de la face externe du stator 9.

Le rotor 103 peut également être réalisé par un empilement de tôles 17 sur lesquelles sont montées, par exemple, des aimants permanents. Le rotor 103 peut également être bobiné ou moulé. Les tôles 17 du rotor 103 peuvent comprendre sur leur partie centrale une ou plusieurs encoches 173 de manière à créer au moins un deuxième passage de fluide de refroidissement entre le rotor 103 et son arbre 101 de rotation.

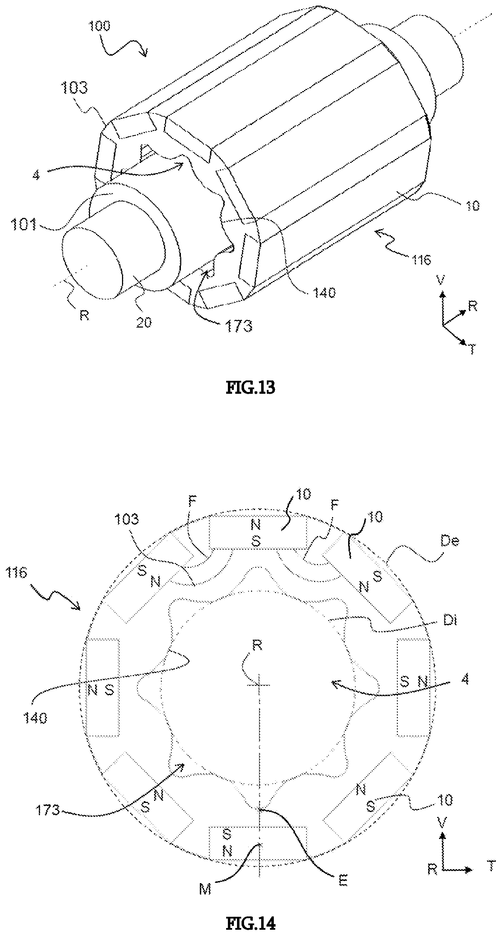

Conformément à l'invention, l'ensemble 1000 conforme à l'invention comprend avantageusement au moins un passage de fluide de refroidissement entre le rotor 103 et l'arbre 101 de la machine électrique 100, l'hélice 1 de refroidissement étant solidaire de la machine électrique 100 ou indépendante de celle-ci, selon les modes de réalisation détaillés précédemment. Un exemple de réalisation d'un tel passage de fluide de refroidissement entre le rotor 103 et l'arbre 101 de la machine électrique 100 sera décrit plus en détail en référence aux FIGURES 13 et 14.

Par ailleurs, la machine électrique 100 peut comprendre au moins un flasque 8 disposé à une extrémité longitudinale du stator 9. Dans l'exemple illustré ici, la machine électrique 100 comprend deux flasques 8 disposés chacun à une extrémité longitudinale du stator 9. Chaque flasque 8 permet de maintenir l'arbre 101 entrainant en rotation le rotor 103 via un palier de rotation 105, tel que par exemple un roulement à billes.

La FIGURE 8 montre que la machine électrique 100 comprend de préférence une chemise 102 recouvrant les flasques 8 et le stator 9. Le recouvrement se fait selon un axe longitudinal L dans lequel la machine électrique 100 s'étend. Lorsque la machine électrique 100 comprend la chemise 102, l'hélice 1 de refroidissement est placée à une extrémité longitudinale de la chemise 102, la chemise 102 ne recouvrant pas la bague externe 53 de l'hélice 1 de refroidissement. La chemise 102 n'est pas non plus plaquée contre les ailettes de refroidissement 99 du stator 9 ceci permet alors de créer un troisième passage de fluide de refroidissement entre les ailettes de refroidissement 99 et la chemise 102.

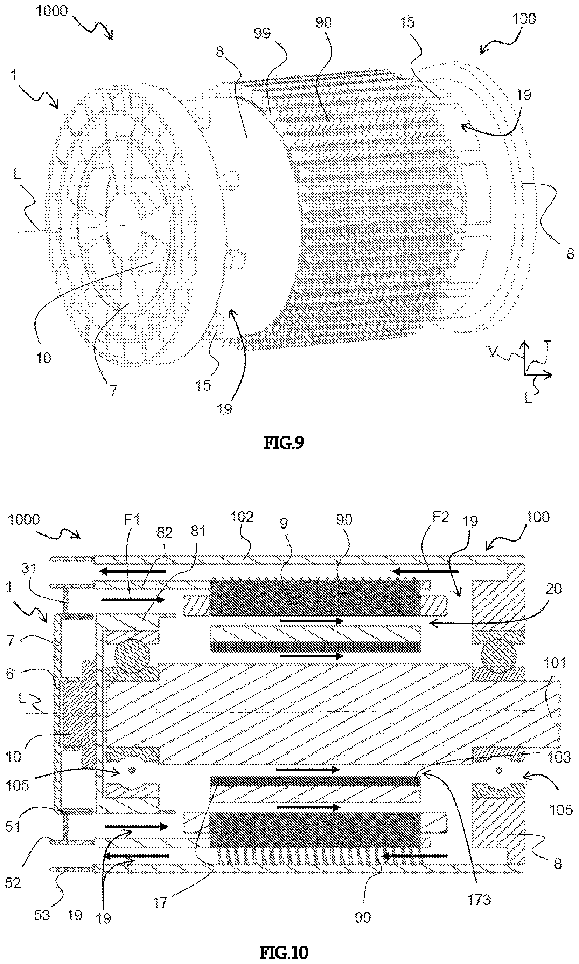

Cette FIGURE 8 permet également de montrer que la machine électrique 100 comprend des ouvertures 19 autorisant la circulation du flux d'air depuis ou vers les différents passages de fluide de refroidissement dans la machine électrique 100. L'hélice 1 de refroidissement se situe alors sur une extrémité longitudinale du stator 9. Lorsque la machine électrique 100 comprend deux flasques 8, l'hélice 1 de refroidissement est fixée à un de ces deux flasques 8. L'hélice 1 de refroidissement est soit entrainée en rotation par l'arbre 101 de la machine électrique, soit par l'intermédiaire d'un actionneur indépendant de ladite machine électrique 100. Dans ce cas, le flasque 8 destiné à recevoir l'hélice 1 de refroidissement comprend des entretoises 15 définissant périphériquement et transversalement à l'axe longitudinal L les ouvertures 19 autorisant la circulation du flux d'air dans la machine électrique 100. Ces entretoises 15 sont également visibles en FIGURE 9. Le flasque 8 opposé quant à lui comprend des ouvertures 19 périphériques permettant une circulation du fluide de refroidissement, par exemple un flux d'air, en U et empêchant ainsi l'air brassé de sortir de la machine électrique 100. Dans le cas d'un flasque fermé, celui-ci comprend des ouvertures périphériques pour la circulation du flux d'air en U, permettant ainsi à l'air brassé de former une boucle à l'intérieur de la machine électrique 100 pour ensuite sortir du côté où est située l'hélice 1 de refroidissement.

Les couronnes 2 de l'hélice 1 de refroidissement sont destinées à coopérer avec ces ouvertures 19. Pour cela chaque bague 5, 51, 52, 53 de l'hélice 1 de refroidissement se situe dans le prolongement longitudinal d'une paroi de la machine électrique 100 et plus précisément une paroi formant la chemise 102 et/ou d'une paroi longitudinale 81, 82 du flasque 8.

Dans l'exemple de réalisation représenté en FIGURE 10, la bague interne 51 de l'hélice 1 de refroidissement se situe dans le prolongement longitudinal d'une paroi interne 81 du flasque 8. La bague intermédiaire 52 de l'hélice 1 se situe dans le prolongement longitudinal d'une paroi externe 82 du flasque 8 et la bague externe 53 se situe dans le prolongement longitudinal d'une paroi formant la chemise 102. Ainsi, par la disposition des premières pales 31 de la première couronne 21, un flux d'air circule dans la machine électrique selon le premier sens F1, c'est-à-dire dans un sens où le flux se dirige en s'éloignant de l'hélice 1 de refroidissement et vers l'intérieur de la machine électrique 100. Ce flux d'air F1 circule, par exemple, dans l'entrefer 20 situé entre le rotor 103 et le stator 9. Ce flux d'air peut également circuler dans les deuxièmes passages de fluide de refroidissement formés par les encoches 173 ménagés au travers des tôles du rotor 103 circulant ainsi entre le rotor 103 et son arbre 101.

Par ailleurs, par la disposition des deuxièmes pales 32 de la deuxième couronne 22, un flux d'air circule dans la machine électrique 100 selon le deuxième sens F2, c'est-à-dire dans un sens où le flux se dirige vers, ou en direction de, l'hélice 1 de refroidissement tout en étant à l'intérieur de la machine électrique 100. Ce flux d'air F2 circule selon cet exemple le long de la face externe du stator 9 et plus précisément entre les ailettes de refroidissement 99 du stator 9, et entre ces ailettes de refroidissement 99 et la chemise 102.

Il est entendu que compte tenu de la nature du fluide de refroidissement d'autres parcours sont possibles. Notamment, le flux d'air peut être entrant dans la machine électrique en circulant le long de la face externe du stator, puis revenir vers l'hélice 1 de refroidissement en passant par l'entrefer 20 et/ou par les deuxièmes passages de fluide de refroidissement formés par les encoches 173.

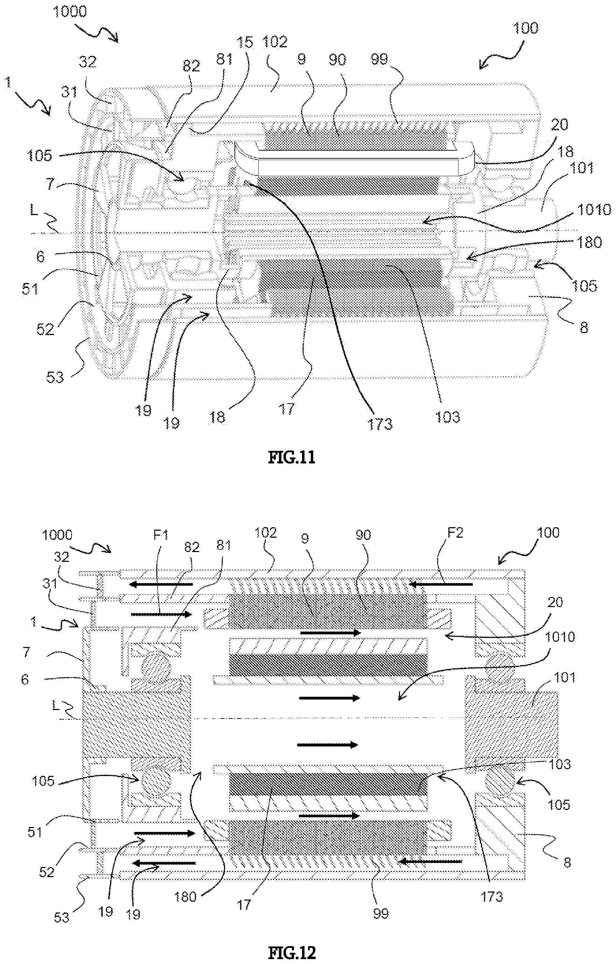

Comme montré en FIGURES 11 et 12, l'arbre 101 entrainant en rotation le rotor 103 peut être creux afin de créer un quatrième passage 1010 de fluide de refroidissement pour le flux d'air à l'intérieur de l'arbre 101. À cet effet, l'arbre 101 comprend à chacune de ses extrémités un manchon 18 pourvu d'orifices 180 pour l'entrée ou la sortie du flux d'air. Ainsi le flux d'air peut aussi circuler à l'intérieur de l'arbre 101 creux et de ses manchons 18 et ainsi refroidir une portion interne du rotor.

On notera que sur les FIGURES 7 à 10, l'hélice 1 de refroidissement est indépendante de la machine électrique 100 qu'elle refroidit, illustrant alors un premier mode de réalisation de l'ensemble 1000. Plus précisément, l'hélice 1 de refroidissement est indépendante de l'arbre 101 entrainant en rotation le rotor 103. À cet effet, l'hélice 1 de refroidissement est configurée pour être entrainée en rotation par l'actionneur électrique 10 indépendant de la machine électrique 100. Ainsi, la vitesse à laquelle tourne la machine électrique 100 n'influence pas la vitesse à laquelle tourne l'hélice 1 de refroidissement, cela permet avantageusement d'évacuer la chaleur générée par la machine électrique 100 lorsqu'elle tourne à faible vitesse.

De préférence, l'actionneur électrique 10 de l'hélice 1 de refroidissement est fixé sur le flasque 8 de la machine électrique 100.

Selon un deuxième mode de réalisation représenté en FIGURE 11 ou 12, l'hélice 1 de refroidissement est solidaire de l'arbre d'entrainement 101 du rotor 103. L'hélice 1 de refroidissement n'est donc pas entrainée en rotation par un actionneur électrique dédié, mais par la rotation de l'arbre 101. Le moyeu 6 de l'hélice 1 de refroidissement est alors directement relié à l'arbre 101 de la machine électrique qui porte le rotor 17.

Dans l'exemple de réalisation représenté en FIGURE 12, un flux d'air circule dans la machine électrique 100 selon un premier sens, c'est-à-dire dans un sens où l'air se dirige en s'éloignant de l'hélice 1 de refroidissement et vers l'intérieur de la machine électrique 100. Ce flux d'air circule, par exemple, dans les premiers passages de fluide de refroidissement ménagés au travers du rotor 103 via les encoches 173 refroidissant ainsi entre le rotor 103 et son arbre 101. Ce flux d'air peut ensuite circuler dans l'entrefer 20 situé entre le rotor 103 et le stator 9 ou bien emprunter le troisième passage de fluide de refroidissement situé entre la chemise 102 et les ailettes 99 du stator 9.

Bien entendu, la description concernant l'hélice 1 de refroidissement ainsi que la circulation du fluide dans la machine électrique 100 s'applique autant au premier mode de réalisation qu'au deuxième mode de réalisation de l'ensemble 1000. L'invention décrite selon ses différents modes de réalisations et variantes permet de tirer une performance importante d'une machine électrique de propulsion d'un véhicule, notamment automobile, tout en maintenant un encombrement limité qui permet de disposer la machine électrique sur le véhicule et de limiter son poids. A encombrement ou poids identique, les performances de la machine électrique sont accrues puisque son refroidissement est renforcé.

Les FIGURES 13 et 14 montrent la machine électrique 100 d'un ensemble 100 selon la présente invention et tel que visible dans les FIGURES précédente, ladite machine électrique comprenant le rotor 103 pouvant être entrainé en rotation par l'intermédiaire de l'arbre 101 de ladite machine électrique 100. L'arbre 101 présente un épaulement afin de créer une surface d'appui 20 destinée à s'insérer dans des paliers de la machine électrique, tels que des roulements à billes.

Le rotor 103 présente un diamètre interne Di et un diamètre externe De. L'arbre 101 présente un diamètre sensiblement proche du diamètre interne Di du rotor 103 et s'insère dans une partie d'une cavité interne 4 du rotor 103. Cette partie de la cavité interne 4 correspond sensiblement au diamètre interne Di.

Le rotor 103 comprend dans une zone externe 116, exposée vers l'extérieur du rotor 103 ou de l'ensemble 100, un nombre P d'éléments magnétiques 10. Dans l'exemple de réalisation représenté sur les FIGURES, les éléments magnétiques 10 sont de forme parallélépipédique. Les éléments magnétiques 10 sont par exemple des aimants permanents. Le rotor 103 peut également être bobiné ou moulé.

Chacun des aimants permanents présente une polarité radiale nord N et une polarité radiale sud S. Afin de mettre en œuvre la rotation du rotor 103, les polarités entre un élément magnétique 10 et son voisin, sont inversées. Autrement dit, si un élément magnétique 10 donné présente une polarité radiale externe nord et une polarité radiale interne sud, alors l'élément magnétique 10 adjacent présente une polarité radiale externe sud et une polarité radiale interne nord. Cette disposition entre deux éléments magnétiques 10 adjacents génère alors un flux électromagnétique à l'intérieur du rotor 103. Le flux électromagnétique est par exemple en forme d'arc de cercle F, comme partiellement représenté sur la FIGURE 14.

Afin de ne pas altérer la magnétisation du rotor 103 et tout en permettant d'assurer un refroidissement ainsi qu'un allègement du rotor 103, de l'ensemble 1000 et/ou de la machine électrique 100, un passage de fluide de refroidissement est créé entre le rotor 103 et l'arbre 101. Pour cela, le rotor 103 comprend des encoches 173. Les encoches 173 s'étendent longitudinalement et de manière parallèle à l'axe de rotation R du rotor 103. Plus précisément le rotor 103 comprend au moins deux encoches 173 délimitant la cavité interne 4, formant alors deux passages de fluide de refroidissement entre le rotor 103 et son arbre 101.

L'encoche 173 est délimitée par une paroi s'étendant dans un plan perpendiculaire à l'axe de rotation R. Au moins une partie de cette paroi respecte le flux électromagnétique F généré par l'élément magnétique 10. Autrement dit, la découpe de l'encoche 173 est réalisée dans une partie du rotor 103 peu soumise voire non soumise au flux électromagnétique F. Ainsi, par la présence des encoches 173 formant des passages de fluide de refroidissement tout autour de l'arbre 101 et tout au long de l'arbre 101, l'invention permet de refroidir plus efficacement le rotor 103, l'arbre 101 et la machine électrique 100 sur laquelle ils sont montés.

Dans l'exemple de réalisation illustré par les FIGURES, chaque encoche 173 forme une concavité sur le diamètre interne Di du rotor 103. Plus précisément, c'est la paroi respectant le flux électromagnétique qui a une forme circulaire concave au vu de l'axe de rotation R.

Deux encoches 173 adjacentes sont séparées l'une de l'autre par une portion de contact 140. La portion de contact 140 est configurée pour venir en appui sur l'arbre 101. Le rotor 103 comprend donc une pluralité de portions de contact 140 configurées pour venir en appui sur l'arbre 101. Ces portions de contact 140 permettent la coopération et la transmission du mouvement de rotation entre le rotor 103 et l'arbre 101. Plus précisément, le sommet de chacune de ces portions de contact 140 définit le diamètre interne Di du rotor 103. Les portions de contact 140 peuvent prendre toutes sortes de formes permettant d'assurer un contact avec l'arbre 101. De manière non limitative, ces portions de contact 140 peuvent avoir une forme de méplat, être arrondies vers l'axe de rotation ou au contraire arrondies dans une direction opposée à l'axe de rotation de manière à adopter la forme circulaire de l'arbre 101. Les portions de contact 140 peuvent aussi être en pointe.

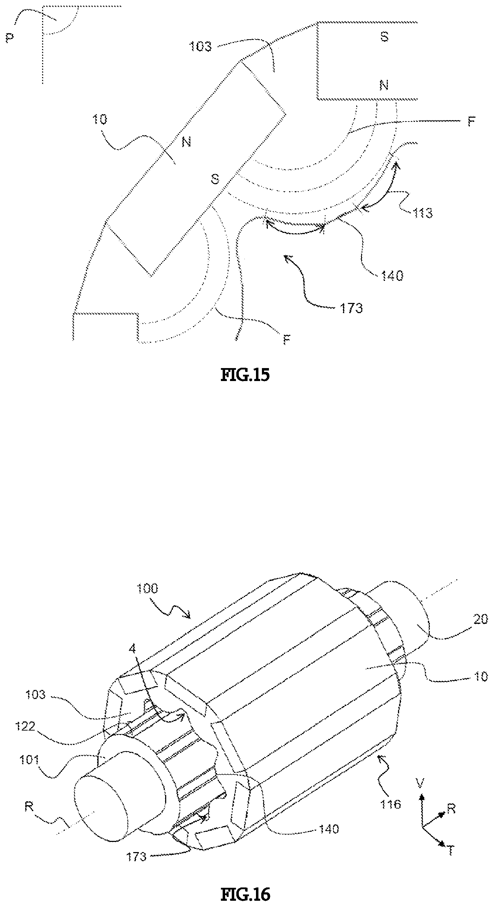

La FIGURE 15 montre un agrandissement d'une partie de la FIGURE 14. La partie 113 de la paroi délimitant les encoches 173, c'est-à-dire la paroi qui s'étend dans le plan P perpendiculaire à l'axe de rotation R, est ici représentée schématiquement par des flèches. Cette partie 113 de la paroi délimitant les encoches 173 respecte les flux électromagnétiques F générés par les éléments magnétiques 10. On comprend alors que la paroi délimitant les encoches 173 permet une circulation du flux électromagnétique entre les éléments magnétiques 10 sans couper les lignes de flux F.

Dans un exemple de réalisation montré en FIGURE 15, le rotor 103 comprend un nombre P d'éléments magnétiques égal à huit et huit encoches 173 adjacentes séparées les unes des autres par huit portions de contact 140 configurées pour venir en appui sur l'arbre 101. Les huit encoches 173 et les huit portions de contact 140 sont situées à intervalle angulaire régulier par rapport à l'axe de rotation R. Plus précisément, les encoches 173 et les portions de contact 140 sont régulièrement espacées, ici de 45 degrés par rapport à l'axe de rotation R. Autrement dit, le secteur angulaire entre chaque encoche 173 est constant et le secteur angulaire entre chaque portion de contact 140 est également constant, ce secteur angulaire étant égal à 360/P, où P correspond au nombre d'éléments magnétiques 10 présents sur le rotor 103. On note aussi qu'un intervalle angulaire entre les encoches 173 et les portions de contact 140 est aussi constant, cet intervalle angulaire étant égal à 360/2P, où P correspond au nombre d'éléments magnétiques 10 présents sur le rotor 103, l'intervalle angulaire est ici de 22,5 degrés. Ainsi comme cela est représenté sur les figures, l'alternance entre les encoches 173 et les portions de contact 140 forme une sinusoïde sur le diamètre interne Di du rotor 103.

La FIGURE 14 illustre également la position relative des éléments magnétiques 10 avec les encoches 173. En effet, dans cet exemple de réalisation, un rayon I passant par un centre M de l'élément magnétique 10 passe aussi par un plan de symétrie longitudinal de l'encoche 173, représenté ici par un plan passant par le sommet E de l'encoche 173 et par le rayon I du rotor 103. Autrement dit, le sommet E de l'encoche 173 est aligné radialement avec l'élément magnétique 10. On notera ici, que le sommet E de l'encoche 173 est légèrement arrondi. De manière plus générale, on peut aussi dire que le rayon I passant par un centre M de l'élément magnétique 10 passe aussi par le point E de l'encoche 173 le plus éloigné de l'axe de rotation R du rotor 103.

En variante et selon le flux électromagnétique F, les éléments magnétiques 10 peuvent être alignés avec les portions de contact 140, ainsi les encoches 173 sont situées entre les éléments magnétiques 10. Autrement dit, un rayon I passant par un centre M de l'élément magnétique 10 passe aussi par un plan de symétrie longitudinal d'une portion de contact 140. Par rapport à la variante de réalisation précédente, les éléments magnétiques 10 sont décalés en rotation d'un angle de 22,5 degrés.

Dans le cas où le rotor 103 est réalisé par un assemblage de tôles rotoriques empilées, chaque tôle rotorique comprend les encoches 173 qui présentent la paroi dont au moins une partie 113 respecte le flux électromagnétique F afin de créer les passages de fluide de refroidissement le long de l'arbre 101. La coupe longitudinale met en évidence que les passages de fluide de refroidissement, et donc les encoches 173, s'étendent parallèlement par rapport à l'axe de rotation R.

La FIGURE 16 représente une variante de réalisation de l'ensemble 100 où l'arbre 101 présente des rainures 122 longitudinales coopérant avec les portions de contact 140 du rotor 103. Ensemble, ces rainures 122 et les portions de contact 140 assurent notamment un guidage du rotor 103 sur l'arbre 101 lors du montage des pièces. En outre, la présence des rainures 122 améliorent la tenue du rotor 103 sur l'arbre 101 par rapport à un arbre 101 lisse, sans rainures, et permettent de transmettre le couple entre l'arbre 101 et le rotor 103.

Il est à noter que le fluide de refroidissement s'insérant dans les encoches 173 du rotor 103 peut tout aussi bien être un liquide qu'un gaz. De manière non limitative, dans la description ci-dessus, le fluide de refroidissement est considéré comme étant de l'air.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Ensemble (1000) comprenant :
- une machine électrique ouverte (100) sur une extrémité longitudinale comprenant :
- un stator (9) ayant des enroulements formant des bobines (106),
- un rotor (103),
- un arbre (101) entraînant le rotor (103) en rotation,
- une hélice (1) de refroidissement de la machine électrique, ladite hélice (1) de refroidissement comprenant au moins deux couronnes (2, 21, 22), dont une première couronne (21) et une deuxième couronne (22), chaque couronne (2, 21, 22) comprenant des pales (3),
dans laquelle les pales (3, 31) de la première couronne (21) de l'hélice (1) de refroidissement sont agencées de manière à générer une circulation d'un flux de fluide de refroidissement dans un premier sens (F1) où le flux se dirige parallèlement à un axe de rotation (R) du rotor (103) en s'éloignant de l'hélice (1), et les pales (3, 32) de la deuxième couronne (22) sont agencées de manière à générer la circulation du flux de fluide de refroidissement dans un deuxième sens (F2), le deuxième sens (F2) étant opposé au premier sens (F1), avec un flux extérieur à la machine électrique (100) entrant par l'hélice (1) de refroidissement et un flux intérieur à la machine électrique sortant par l'hélice (1).

2. Ensemble (1000) selon la revendication précédente, dans lequel l'hélice (1) de refroidissement est indépendante de l'arbre (101) entraînant le rotor (103) en rotation.

3. Ensemble (1000) selon la revendication précédente, dans lequel l'hélice (1) de refroidissement est configurée pour être entrainée en rotation par un actionneur électrique (10) indépendant de la machine électrique (100).

4. Ensemble (1000) selon la revendication précédente, dans lequel l'actionneur électrique indépendant (10) est fixé sur un flasque (8) de la machine électrique (100).

5. Ensemble (1000) selon l'une quelconque des revendications précédentes, dans lequel l'hélice (1) de refroidissement est située sur une extrémité longitudinale de la machine électrique (100).

6. Ensemble (1000) selon l'une quelconque des revendications précédentes, dans lequel la machine électrique (100) comprend une chemise (102) dans laquelle sont placés le stator (9) et le rotor (103), l'hélice (1) de refroidissement étant placée à une extrémité longitudinale de la chemise (102).

7. Ensemble (1000) selon l'une quelconque des revendications précédentes, dans lequel l'arbre (101) de la machine électrique (1000) est agencé pour s'insérer dans une partie d'une cavité interne (4) du rotor (103), ledit rotor (103) comprenant, dans une zone externe (116), au moins un élément magnétique (10) générant un flux électromagnétique (F), la cavité interne (4) dudit rotor (103) étant délimitée par au moins deux encoches (173) adjacentes séparées l'une de l'autre par une portion de contact (140) configurée pour venir en appui sur l'arbre (2), au moins une partie (13) d'une paroi délimitant les encoches (173) respectant le flux électromagnétique (F) généré par l'élément magnétique (10).

8. Ensemble (1000) selon la revendication précédente, dans lequel la paroi délimitant les encoches (173) s'étend dans un plan (P) perpendiculaire à un axe de rotation (R) du rotor (103).

9. Ensemble (1000) selon l'une quelconque des revendications 7 ou 8, dans lequel chaque encoche (173) a une forme courbe concave vu d'un axe de rotation (R) du rotor (103), et/ou la portion de contact (140) a une forme circulaire convexe vu d'un axe de rotation (R) du rotor (103).

10. Ensemble (1000) selon l'une quelconque des revendications 7 à 9, dans lequel un rayon (I) du rotor (103) passant par un centre (M) de l'élément magnétique (10) passe aussi par un point (E) de l'encoche (173) le plus éloigné d'un axe de rotation (R) du rotor (103).

11. Ensemble (1000) selon la revendication précédente, dans lequel chaque encoche (173) a un sommet (E) arrondi.

12. Ensemble (1000) selon la revendication précédente, **caractérisé en ce que** l'arbre (101) comprend des rainures (122) pour coopérer avec les portions de contact (140) du rotor (103).

13. Ensemble (1000) selon la revendication précédente, **caractérisé en ce que** les rainures (122) s'étendent parallèlement à un axe de rotation (R) du rotor (103).

## Patentansprüche

1. Baugruppe (1000), umfassend:
- eine an einem Längsende offene elektrische Maschine (100), welche umfasst:
- einen Stator (9) mit Wicklungen, die Spulen (106) bilden,
- einen Rotor (103),
- eine Welle (101), die den Rotor (103) drehend antreibt,
- einen Propeller (1) zum Kühlen der elektrischen Maschine, wobei der Kühlpropeller (1) mindestens zwei Kränze (2, 21, 22) umfasst, darunter einen ersten Kranz (21) und einen zweiten Kranz (22), wobei jeder Kranz (2, 21, 22) Schaufeln (3) umfasst,
wobei die Schaufeln (3, 31) des ersten Kranzes (21) des Kühlpropellers (1) so eingerichtet sind, dass sie eine Zirkulation eines Kühlfluidflusses in einer ersten Richtung (F1) erzeugen, wobei sich der Fluss parallel zu einer Drehachse (R) des Rotors (103) bewegt und sich dabei vom Propeller (1) entfernt, und die Schaufeln (3, 32) des zweiten Kranzes (22) so eingerichtet sind, dass sie die Zirkulation des Kühlfluidflusses in einer zweiten Richtung (F2) erzeugen, wobei die zweite Richtung (F2) der ersten Richtung (F1) entgegengesetzt ist, wobei ein Fluss außerhalb der elektrischen Maschine (100) durch den Kühlpropeller (1) eintritt, und ein Fluss innerhalb der elektrischen Maschine durch den Propeller (1) austritt.

2. Baugruppe (1000) nach dem vorstehenden Anspruch, wobei der Kühlpropeller (1) von der den Rotor (103) drehend antreibenden Welle (101) unabhängig ist.

3. Baugruppe (1000) nach dem vorstehenden Anspruch, wobei der Kühlpropeller (1) dafür konfiguriert ist, von einem elektrischen Stellantrieb (10), der von der elektrischen Maschine (100) unabhängig ist, drehend angetrieben zu werden.

4. Baugruppe (1000) nach dem vorstehenden Anspruch, wobei der unabhängige elektrische Stellantrieb (10) an einem Flansch (8) der elektrischen Maschine (100) befestigt ist.

5. Baugruppe (1000) nach einem der vorstehenden Ansprüche, wobei der Kühlpropeller (1) an einem Längsende der elektrischen Maschine (100) liegt.

6. Baugruppe (1000) nach einem der vorstehenden Ansprüche, wobei die elektrische Maschine (100) einen Mantel (102) umfasst, in dem der Stator (9) und der Rotor (103) untergebracht sind, wobei der Kühlpropeller (1) an einem Längsende des Mantels (102) untergebracht ist.

7. Baugruppe (1000) nach einem der vorstehenden Ansprüche, wobei die Welle (101) der elektrischen Maschine (1000) dafür eingerichtet ist, sich in einen Teil eines inneren Hohlraum (4) des Rotors (103) einzufügen, wobei der Rotor (103) in einem äußeren Bereich (116) mindestens ein magnetisches Element (10) umfasst, das einen elektromagnetischen Fluss (F) erzeugt, wobei der innere Hohlraum (4) des Rotors (103) von mindestens zwei benachbarten Kerben (173) begrenzt wird, die durch einen Kontaktabschnitt (140) voneinander getrennt sind, der dafür konfiguriert ist, an der Welle (2) in Anlage zu gehen, wobei mindestens ein Teil (13) einer Wand, die die Kerben (173) begrenzt, den vom magnetischen Element (10) erzeugten elektromagnetischen Fluss (F) wahrt.

8. Baugruppe (1000) nach dem vorstehenden Anspruch, wobei sich die Wand, die die Kerben (173) begrenzt, in einer Ebene (P) senkrecht zu einer Drehachse (R) des Rotors (103) erstreckt.

9. Baugruppe (1000) nach einem der Ansprüche 7 oder 8, wobei jede Kerbe (173) von einer Drehachse (R) des Rotors (103) aus betrachtet eine konkav gekrümmte Form aufweist, und/oder der Kontaktabschnitt (140) von einer Drehachse (R) des Rotors (103) aus betrachtet eine konvexe Kreisform aufweist.

10. Baugruppe (1000) nach einem der Ansprüche 7 bis 9,wobei ein Radius (I) des Rotors (103), der durch einen Mittelpunkt (M) des magnetischen Elements (10) verläuft, ebenfalls durch einen Punkt (E) der Kerbe (173) verläuft, der am weitesten von einer Drehachse (R) des Rotors (103) entfernt ist.

11. Baugruppe (1000) nach dem vorstehenden Anspruch, wobei jede Kerbe (173) eine gerundete Spitze (E) aufweist.

12. Baugruppe (1000) nach dem vorstehenden Anspruch, **dadurch gekennzeichnet, dass** die Welle (101) Nuten (122) umfasst, um mit den Kontaktabschnitten (140) des Rotors (103) zusammenzuwirken.

13. Baugruppe (1000) nach dem vorstehenden Anspruch, **dadurch gekennzeichnet, dass** sich die Nuten (122) parallel zu einer Drehachse (R) des Rotors (103) erstrecken.

## Claims

1. Assembly (1000) comprising:
- an electrical machine (100) which isopen at a longitudinal end and comprises:
- a stator (9) having windings which form coils (106),
- a rotor (103),
- a shaft (101) rotating the rotor (103),
- an impeller (1) for cooling the electrical machine, said cooling impeller (1) comprising at least two crowns (2, 21, 22), including a first crown (21) and a second crown (22), each crown (2, 21, 22) comprising blades (3),
wherein
the blades (3, 31) of the first crown (21) of the cooling impeller (1) are arranged so as to generate a circulation of a cooling fluid flow in a first direction (F1) in which the flow travels parallel to a rotation axis (R) of the rotor (103) and away from the impeller (1), and the blades (3, 32) of the second crown (22) are arranged so as to generate the circulation of the cooling fluid flow in a second direction (F2), the second direction (F2) being opposite the first direction (F1),with a flow outside the electrical machine (100) entering via the cooling impeller (1) and a flow inside the electrical machine exiting via the impeller (1).

2. Assembly (1000) according to the preceding claim, wherein the cooling impeller (1) is independent of the shaft (101) rotating the rotor (103).

3. Assembly (1000) according to the preceding claim, wherein the cooling impeller (1) is configured to be rotated by an electrical actuator (10) which is independent of the electrical machine (100).

4. Assembly (1000) according to the preceding claim, wherein the independent electrical actuator (10) is fastened on a flange (8) of the electrical machine (100).

5. Assembly (1000) according to any of the preceding claims, wherein the cooling impeller (1) is located on a longitudinal end of the electrical machine (100).

6. Assembly (1000) according to any of the preceding claims, wherein the electrical machine (100) comprises a jacket (102) in which the stator (9) and the rotor (103) are placed, the cooling impeller (1) being placed at a longitudinal end of the jacket (102).

7. Assembly (1000) according to any of the preceding claims, wherein the shaft (101) of the electrical machine (1000) is arranged to be inserted into a part of an inner cavity (4) of the rotor (103), said rotor (103) comprising, in an outer zone (116), at least one magnetic element (10) generating an electromagnetic flux (F), the inner cavity (4) of said rotor (103) being delimited by at least two adjacent notches (173) separated from one another by a contact portion (140) configured to bear on the shaft (2), at least a part (13) of a wall delimiting the notches (173) in line with the electromagnetic flux (F) generated by the magnetic element (10).

8. Assembly (1000) according to the preceding claim, wherein the wall delimiting the notches (173) extends in a plane (P) perpendicular to a rotation axis (R) of the rotor (103).

9. Assembly (1000) according to any of claims 7 or 8, wherein each notch (173) has a concave curved shape seen from a rotation axis (R) of the rotor (103), and/or the contact portion (140) has a convex circular shape seen from a rotation axis (R) of the rotor (103).

10. Assembly (1000) according to any of claims 7 to 9, wherein a radius (I) of the rotor (103) passing through a centre (M) of the magnetic element (10) also passes through a point (E) of the notch (173) which is furthest from a rotation axis (R) of the rotor (103).

11. Assembly (1000) according to the preceding claim, wherein each notch (173) has a rounded apex (E).

12. Assembly (1000) according to the preceding claim, **characterised in that** the shaft (101) comprises grooves (122) for cooperating with the contact portions (140) of the rotor (103).

13. Assembly (1000) according to the preceding claim, **characterised in that** the grooves (122) extend parallel to a rotation axis (R) of the rotor (103).
